# EUROPEAN PATENT APPLICATION

(11) **EP 4 844 635 A1**
(43) Date of publication of application: **25.11.2026**
(21) Application number: 25178557.2
(22) Date of filing: 23.05.2025
(51) Int. Cl.: G06N 3/049, G06N 3/065

(54) **MODULAR CURRENT-DOMAIN ANALOG ARRAY FOR NEURAL NETWORK**

(71) Applicant: Innatera Nanosystems B.V., 2288 GK Rijswijk (NL)
(72) Inventor: DALAKOTI, Aditya, 2288 GK Rijswijk (NL); SINGH, Kamlesh Kumar, 2288 GK Rijswijk (NL); ZJAJO, Amir, 2288 GK Rijswijk (NL)
(74) Representative: Hoyng Rokh Monegier B.V.

(57) **Abstract**

An integrated circuit comprising a current-mode neural network. The neural network comprises a plurality of input shaping circuits, each input shaping circuit having an input for receiving a neural network input signal and being configured to apply a transfer function to the input signal to generate an analog processed input current, a plurality of current-mode synaptic elements, each synaptic element connected to receive one of the processed input currents from one of the input shaping circuits and configured to apply a weight to the processed input current to generate an analog synapse output current, a switch-box comprising a plurality of current-mode switches, each switch connected to receive analog synapse output current from a subset of the synaptic elements, the switch-box being configured to selectively route the received analog synapse output current to one of a plurality of switch-box outputs, and a plurality of neurons, each neuron connected to one of the switch-box outputs and configured to generate a neuron output in response to a received analog synapse output current.

## Description

### TECHNICAL FIELD

This disclosure generally relates to modular current-domain analog arrays for application in neural networks, and more particularly to systems and methods for current-mode signal processing within analog spiking neural networks arrays.

### BACKGROUND

Neural networks (NNs) and spiking neural networks (SNNs) are signal processing systems whose design is inspired by biological neural networks. Information is encoded and distributed across a complex network of neurons and synapses.

The synapses store information (e.g. in the form of weights) and use this to perform basic operations on incoming signals, and the neurons generate outputs based on signals coming in from the synapses. The connections between synapses and neurons determine the shape of the NN or SNN, which together with the information stored in the synapses determines the signal-processing function of the neural network.

Analog circuits, typically fabricated as an integrated circuit, enable a power-efficient way to implement such neural networks. Signal transitions from analog to digital, and digital to analog domains cause high power dissipation, supply noise injection and other similar adverse effects. This can be abated by using analog communication within the connection circuits for connectivity of synapses and neurons.

Within the design space, there is a trade-off between connectivity, wiring complexity, signal-to-noise ratio and effective number of inputs and outputs supported by the connection circuits. This trade-off can be simplified using a combination of improved circuit design techniques, control mechanisms and use-case driven input to output connectivity. Correct combinations of these need to be determined in order to make a functional area and power efficient neuromorphic system.

Artificial neural networks consist of rows and columns of synapses and neurons that mimic the signal-processing functionality of the brain. Hierarchical, modular connectivity structures are needed to handle the connectivity requirements between synapses and neurons for complex use-cases. Typical implementations achieve this connectivity with local synapses and neurons connected in hierarchical structures with a complex Network on Chip (NoC) to communicate intra-network signals and signals between sub-networks. This is done by translating the signals from analog to digital, transmitting digital signals through the NoC, and then translating from digital back to analog. Major communication is handled in this way by a digital NoC.

### SUMMARY OF INVENTION

The present invention addresses these issues of conventional neural networks by creating precisely controlled and matched modular structures in the analog domain and doing all the communication using analog current-domain signaling. In this way, signal translations can be reduced, resulting in significant power savings and reduced noise injection. For typical use cases, there is always a trade-off between number of inputs and outputs that can fit into a given semiconductor die area for a cross-bar module (synapse array). The use of current-mode components and analog current-mode signaling interconnections can further alleviate this trade-off.

The present invention in a first aspect relates to an integrated circuit comprising a current-mode neural network. The network comprises a plurality of input shaping circuits, synaptic elements, neurons, and a switch-box. Each input shaping circuit has an input for receiving a neural network input signal and being configured to apply a transfer function to the input signal to generate an analog processed input current. The synaptic elements are each connected to receive one of the processed input currents from one of the input shaping circuits and are each configured to apply a weight to the processed input current to generate an analog synapse output current. The switch-box comprises a plurality of current-mode switches each connected to receive analog synapse output current from a subset of the synaptic elements, the switch-box being configured to selectively route the received analog synapse output current to one of a plurality of switch-box outputs. The neurons are each connected to one of the switch-box outputs and configured to generate a neuron output current in response to a received analog synapse output current. Each synaptic element of the subset of synaptic elements typically receives a processed input current from different one of the input shaping circuits.

The synaptic elements may be arranged in rows and columns in an array, and wherein the subset of synaptic elements comprises synaptic elements in one column of the array, the synapse output currents of the column of synaptic elements being summed for input to the switch-box. For example, the synaptic elements may be connected in an array with row lines connecting the output of one of the input shaping circuits to the input terminals of synaptic elements in a row of the array, and column lines connecting the output terminals of synaptic elements in a column of the array. The switch-box may be arranged to selectively connect a column line connected to synapses in a column of the synaptic array with the input terminal of one of the neurons.

The input shaping circuits perform processing of input signals to the neural network to generate analog current signals for input to the synaptic elements. For example, the input shaping circuits may be configured to translate voltage-mode network input signals into corresponding scaled current-mode signals for input to the synapses, and/or may convert a non-spiking network input signal into a spike train current signal when used in a spiking neural network.

The synaptic elements, switch-box and neurons are current-mode components, designed for receiving, processing and outputting analog current signals (i.e. signals in which current rather than voltage is the controlled variable). These components of the neural network may be implemented to operate with differential currents, e.g. inhibitory and excitory current-mode signals. The current-more design provides particular benefits for implementing the integrated circuit neural network with a dense network of interconnections for neuron-synapse communication. The current-mode switch-box interconnect helps reduce power dissipation, improves speed and resistance to noise and cross-talk, provides for better scalability, and is easier to implement in networks using excitory/inhibitory synapse currents. In particular, the current-mode switch-box does not require voltage buffers (that are usually power hungry and noise prone) for long connections.

The outputs of the subset of synaptic elements may be connected together to sum the analog synapse output currents from the subset of synaptic elements for input to the switch-box. The current-mode signals enable this current summing via a simple wired connection with additional active components. Each switch of the switch-box circuit receives the summed analog synapse output current derived from the outputs of the subset of synaptic elements (e.g. the synaptic elements of a column of the array). The switch-box may be configured to selectively route the analog synapse output current received from two or more columns in an array to one of the switch-box outputs.

The switch-box may be configured to selectively disconnect the subset of synaptic elements from all of the switch-box outputs. This enables the switch-box to gate the current from the subset of synaptic elements (e.g. the synaptic elements of a column of the array), reducing power consumption by avoiding leakage current flowing from unused synaptic elements to neurons or other circuits.

The integrated circuit may be constructed with no active circuit elements electrically connected between the synaptic elements and the switch-box, and no active circuit elements electrically connected between the switch-box and the neurons. This design is made possible (particularly for larger arrays) by the current-mode design, avoiding the need for buffers typically used in voltage-mode designs.

The integrated circuit may be formed on a single semiconductor die. This construction of the integrated circuit may be implemented with the components of the neural network (input shaping circuits, synaptic elements, switch-box and neurons) all formed (e.g. by lithography) on a single semiconductor die. Or the integrated circuit may be implemented using 2.5D or 3D semiconductor die technology, with the components formed on multiple semiconductor dies arranged horizontally or vertically on a common substrate or interposer to form a single integrated circuit.

The current-mode neural network of the integrated circuit may comprise two or more subnetworks or network portions formed on two or more semiconductor dies, each subnetwork or network portion comprising one or more current-mode switch-box circuits, wherein outputs of a first switch-box circuit of a first subnetwork or first network portion are connected to inputs of a second switch-box circuit of a second subnetwork or second network portion. These connections between switch-boxes on separate dies may be made by a bus (e.g. a bus formed on a substrate or interposer in a 2.5D construction) of by vias (e.g. through-silicon vias in a 3D stacked construction). The neural network may be constructed with no active circuit elements electrically connected between the first and second switch-box circuits. This design is made possible by the current-mode design of the switch-box circuits, avoiding the need for buffer circuits typically used in voltage-mode designs.

The integrated circuit may be constructed using CMOS technology alternating n-type and p-type components, for example n-type current-mode synaptic elements implemented with n-type active devices and p-type neurons implemented with p-type active devices, or vice versa with p-type current-mode synaptic elements and n-type neurons. The choice of which devices to use in which primitive is driven by the manufacturing technology used and variability of a device in that technology. A current-mode switch placed between a p-type source of current (e.g. a p-type synaptic element) and a n-type current sink (e.g. an n-type neuron) can stop the flow of current between the source and the sink. This stopped current flow achieves power gating in the design since the complete current path is stopped by the open switch. This enables distributed power gating as an additional benefit of current mode design.

The integrated circuit may have the synaptic elements arranged in distinct arrays (e.g. forming multiple sub-arrays), the arrays comprising a first array of the synaptic elements separated from a second array of the synaptic elements by a second switch-box interposed between the first and second arrays, with the second switch-box selectively connecting the outputs of a subset of synapses in the first array with the outputs of a subset of synapses in the second array.

The second switch-box comprises a plurality of switches, each switch connected to receive synapse output current from a subset of the synaptic elements of the first array, and the second switch-box is configured to selectively route a received synapse output current to one of the outputs of the second switch-box. The output current from each output of the second switch-box is connected to sum with synapse output current from a subset of the synaptic elements of the second array. For example, the second switch-box may selectively connect a column line connected to synapses in a column of the first array with one of the column lines connected to synapses in a column of the second array.

The synaptic elements of each of the first and second arrays may be arranged in rows and columns, wherein the second switch-box is arranged to connect the outputs of one or more columns of synaptic elements of the first array to the outputs of one column of synaptic elements of the second array.

Similarly to the (first) switch-box described above, the second switch-box may be configured to selectively disconnect the subset of synaptic elements of the first array from all of the second switch-box outputs. The integrated circuit may be constructed with no active circuit elements electrically connected between the synaptic elements of the first array and the second switch-box, and no active circuit elements electrically connected between the second switch-box and the synaptic elements of the second array.

The integrated circuit may have the synaptic elements arranged in distinct arrays with a third switch-box interposed between third and fourth arrays, with the third switch-box selectively connecting the inputs of a subset of synapses in the third array with the inputs of a subset of synapses in the fourth array.

The third switch-box comprises a plurality of switches, each switch connected to receive one of the processed input currents from one of the input shaping circuits, the third switch-box being configured to selectively route a received processed input current to one of the outputs of the third switch-box. Each output of the third switch-box is connected to inputs of a subset of the synaptic elements of the fourth array. For example, the third switch-box may selectively connect a row line connected to an input shaping circuit and the input terminals of synapses in a row of the third array with one of the row lines connected to the input terminals of synapses in a row of the fourth array.

The synaptic elements of each of the third and second arrays may be arranged in rows and columns, wherein the third switch-box is arranged to connect the inputs of one or more rows of synaptic elements of the third array to the inputs of one row of synaptic elements of the fourth array.

Similarly to the (first) switch-box described above, the third switch-box may be configured to selectively disconnect the inputs of synaptic elements of the third array from all of the third switch-box outputs.

The integrated circuit may be constructed with no active circuit elements electrically connected between the synaptic elements of the third array and the third switch-box, and no active circuit elements electrically connected between the third switch-box and the synaptic elements of the fourth array.

In another aspect, the invention provides a method for generating a layout design for an integrated circuit using primitives, the integrated circuit comprising a current-mode neural network and the primitives each comprising a layout design of one or more components of the neural network. The method comprises providing a synaptic element array layout of an array of current-mode synaptic elements, a switch-box circuit primitive of a current-mode switch-box circuit with a plurality of inputs and outputs and a plurality of switches, and a neuron row layout of a row of current-mode neurons. In the synaptic element array layout of an array of current-mode synaptic elements, each synaptic element has an input and an output and is adapted to apply a weight to an input current to generate a synapse output current, the synaptic elements being arranged in rows and columns of the array, wherein the synaptic elements in each row have their inputs connected to a row line and the synaptic elements in each column have their outputs connected to a column line. The switch-box circuit primitive of a current-mode switch-box circuit has a plurality of inputs and outputs and a plurality of switches, the switch-box circuit being adapted to selectively connect one of its inputs to one of its outputs by one or more of its switches. In the neuron row layout of a row of current-mode neurons, each neuron has an input and an output and is adapted to receive an input current and generate a neuron output current in response.

The method further comprises forming the layout design of the neural network by arranging the switch-box circuit primitive adjacent to the synaptic element array layout with the inputs of the switch-box circuit primitive aligned with the column lines of the synaptic element array primitive, and with no active circuit elements electrically connected between the outputs of the synaptic elements and the inputs of the switch-box circuit, and arranging the neuron row layout adjacent to the switch box-circuit primitive with the outputs of the switch-box circuit primitive aligned with the inputs of the neurons of the neuron row primitive, and with no active circuit elements electrically connected between the outputs of the switch-box circuit primitive and the inputs of the neurons.

The method may further comprises providing an input shaping circuit primitive, the input shaping circuit having an input and an output and being adapted to apply a transfer function to a signal at its input to generate a current at its output, forming a layout of a column of the input shaping circuit primitives by arranging a plurality of the input shaping circuit primitives adjacent to each other, and extending the layout design of the neural network by arranging the input shaping circuit column layout adjacent to the synaptic element array layout so that the outputs of the input shaping circuits align with the row lines of the synaptic element array with no active circuit elements electrically connected between the outputs of the input shaping circuits and the inputs of the synaptic elements.

The synaptic element array layout may be produced by providing a primitive of one of the current-mode synaptic elements of the array, each synaptic element primitive comprising a portion of one of the row lines connected to the input of the synaptic element and a portion of one of the column lines connected to the output of the synaptic element, and arranging a plurality of the synaptic element primitives adjacent to each other in an array, with the row line portion of each synaptic element primitive aligned with the row line portion of each horizontally-adjacent synaptic element primitive, and with the column line portion of each synaptic element primitive aligned with the column line portion of each vertically-adjacent synaptic element primitive, and with no active circuit elements electrically connected between adjacent ones of the synaptic element primitives.

The neuron row layout may be produced by providing a primitive of a current-mode neuron, the neuron having an input and an output and being adapted to receive an input current and generate a neuron output current in response, and arranging a plurality of the neuron primitives adjacent to each other with no active circuit elements electrically connected between adjacent ones of the neurons in the row.

The method may comprise optimization of the input shaping circuit primitive, the current-mode synaptic element primitive, the neuron primitive, and/or the switch-box circuit primitive. The optimization may comprise adjusting the primitive to meet a target die area specification, comprising reducing the size of individual circuit elements (e.g. one or more transistors) of the primitive in increments, and testing if the primitive passes a performance threshold after each reduction. The optimization may comprise adjusting the primitive to meet a target power specification, comprising reducing the operating voltage or current of the active elements (e.g. the transistors) of the primitive in increments, and testing if the primitive passes a performance threshold after each reduction. The optimization may comprise adjusting the primitive to meet a target yield specification, comprising increasing the size and/or increasing the operating voltage of certain circuit elements (e.g. transistors) of the primitive in increments, and testing if the primitive passes a performance threshold after each reduction. The method may comprise performing the above optimizations on the synaptic element array layout, the neuron row layout, and/or the integrated circuit layout.

### BRIEF DESCRIPTION OF THE DRAWINGS

Embodiments will now be described, by way of example only, with reference to the accompanying drawings in which corresponding reference symbols indicate corresponding parts, and in which:
FIG. 1 is a schematic block diagram of an example of a typical neurosynaptic array;
FIG. 2A is a schematic block diagram of inhibitory and excitatory synaptic output current summing;
FIG. 2B is a schematic block diagram of single synaptic output current summing;
FIG. 3 is a schematic diagram of an example of a control current divider primitive;
FIG. 4 is a schematic diagram of an example of an input shaping circuit primitive;
FIG. 5 is a schematic diagram of an example of a synapse primitive;
FIG. 6 is a schematic diagram of an example of a switchbox primitive;
FIG. 7 is a schematic diagram of an example of a neuron primitive;
FIG. 8A and 8B show a flowchart of a design method using modular current-mode primitives;
FIG. 9A and 9B shows a flowchart of a design method using primitives for layout of an NxM neural network array;
FIG. 10 is a schematic block diagram of synapses connected to neurons via a switch-box circuit;
FIG. 11-18 are schematic block diagrams of examples of neuromorphic arrays including switch-box interconnect circuits in various arrangements;
FIG. 19 is a schematic diagram of an example of a 2.5D implementation of current-mode neural networks with switch-box circuits;
FIG. 20 is a schematic diagram of an example of a 3D stacked implementation of current-mode neural networks with switch-box circuits;
FIG. 21 is a schematic diagram of an example of a combined 2.5D and 3D stacked implementation of current-mode neural networks with switch-box circuits.

### DESCRIPTION OF EMBODIMENTS

Hereinafter, certain embodiments will be described in further detail. It should be appreciated, however, that these embodiments should not be construed as limiting the scope of protection for the present disclosure.

### Signal Processing Model and Design Optimization

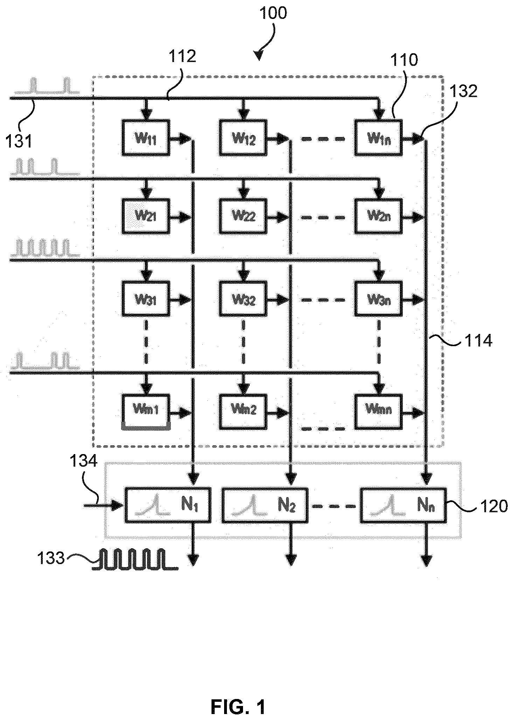

FIG. 1 illustrates an example of a neurosynaptic network 100 (such as a spiking neural network) comprising an array of interconnected synaptic elements (synapses) 110 and neurons 120. The synaptic elements are arranged in an array with row lines 112 connected to the input terminals of the synaptic elements 110 in each row, and column lines 114 connected to the output terminals of the synaptic elements 110 in each column. Each synaptic element 110 receives a synaptic input signal 131 and applies a weight W₁₁-Wₘₙ to the signal to generate a synaptic output signal 132. Each neuron 120 is connected to receive synaptic output signals 132 from one or more synapses 110, typically from a large number of synapses in a column of the array. In a spiking neural network, the neurons 120 generate a spatio-temporal spike train output signal 133 in response to the neuron input signals received from the synaptic elements 110.

Current-mode and voltage-mode circuits represent two fundamental approaches to representing and manipulating electrical signals. Voltage-mode circuits operate with signals in the voltage domain in which voltage level is the primary controlled signal variable, while current-mode circuits operate with current domain signals in which current is the primary controlled signal variable. Voltage-mode is used in most standard digital logic circuits and has the advantage of being relatively simple to design and analyze.

Each neuron 120 typically receives a control input 134 and implements a non-linear function applied to the weighted sum of its input signals (e.g. the synaptic output signals 132 from the connected synaptic elements 110). All weights that are applied in the synaptic elements to weight the individual neuron input signals are grouped in a weight vector W, and all inputs to the neuron are grouped in an input vector X. The response of a single neuron to the input vector X can be expressed as: $Y = f \left({\sum }_{n = 1}^{N} {W}_{n} {X}_{n}\right) = f \left(W⋅X\right)$ (1)

The number of input signals applied to the neuron, i.e. the dimension of the input vector, is generally significantly large. To be able to more easily construct the weighted input of the neuron *W·X,* a neural network may be implemented with synaptic elements 110 that generate outputs 132 in the current domain, because signal summing in the current domain may be accomplished by simply connecting the outputs together, e.g. by connecting the outputs of all the synaptic elements in a column to a column line 114, to generate a summed synapse output current for input a neuron 120.

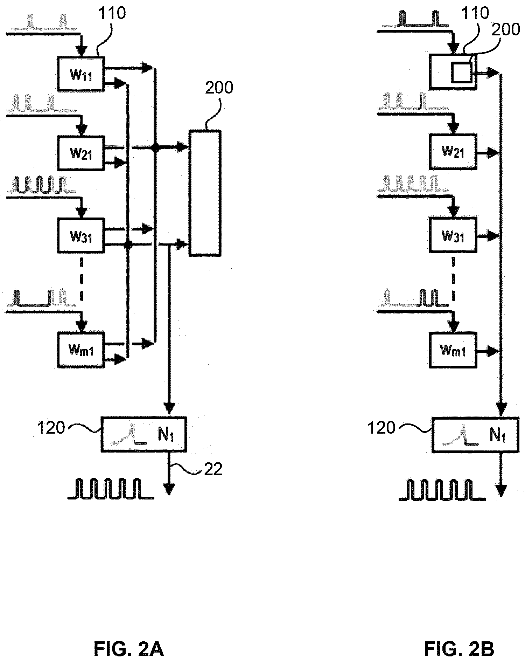

In general, two distinctive approaches can be utilized to derive the weighted input vector in a current domain design. In a first approach illustrated in FIG. 2A, each of the synapses 110 have two symmetric output currents which are first separately summed, and the difference of the two summed currents is then used to form the weighted input to a neuron 120. In a second approach illustrated in FIG. 1B, the synapses 110 each have one bipolar (positive/negative, excitatory/inhibitory) output current, and the weighted input is formed by summing the bipolar output currents for input to a neuron 120.

In the FIG. 2B design, each synapse 110 usually includes a current mirror circuit 200, increasing the complexity of the synapse circuits which increases the chip area required for the neural network (as there are a large number of synapses). However, the design of the network is simplified since all building blocks (synapses 110 and neurons 120) are identical since the current mirrors 200 are built into each synapse 110. In the FIG. 1A design, the current mirror(s) 200 are separate from the synapses 110 and need to be re-designed when implementing a neuron 120 with a higher or lower dimensional input vector (e.g. a differing number of synapse outputs for input to a neuron).

Assuming that the weighed neuron input *W·X* is approximately saturated for weighted inputs satisfying |*W·X*|>*W·Xₛₐₜ,* where *Xₛₐₜ* is the input saturation current of a neuron 120, the weighted input need only to be relatively accurate for a limited range: $\left\{\begin{matrix}W ⋅ X < - W ⋅ {X}_{sat} non accurate summing \\ \left|W⋅X\right| < W ⋅ {X}_{sat} limited accurate summing \\ W ⋅ X > W ⋅ {X}_{sat} non ccurates umming\end{matrix}\right.$ (2)

Assuming that the current mirrors 200 in FIG. 2A and 2B have identical current transfer, the accuracy of both methods is the same.

### Deviation of Weight Vector from Target Value

During training of the neurosynaptic network, input vectors *X^{r}* and their associated desired response *R^{r}* are offered as training inputs. If the neurosynaptic network is trained with the back-propagation algorithm, with each epoch, for every *r^{th}* training vector, the weight vectors in the synapses of the neural network are adapted in such a way to minimize a predefined cost function E. The minimization is completed according to equation 3: $\begin{matrix}ΔW = - η \frac{\partial E}{\partial W} = \frac{- η}{P} {\sum }_{r = 1}^{V} \frac{\partial E}{\partial W} \\ {ΔW}^{r} = - η \frac{\partial {E}^{r}}{\partial W} = η \left({R}^{V}-f\left(W⋅{X}^{r}\right)\right) f ′ \left(W⋅{X}^{r}\right) {X}^{r}\end{matrix}$ (3) where *η* is the learning rate, r represents the index of the training pattern, *V* designates the total number of patterns in the training set, *R^{r}* is the target response for the *r^{th}* training pattern, and *Y^{r}* is the response of the network for the *r^{th}* training pattern.

Deviation of the actual weight from the optimal *W^{ε}* can be decomposed into two components: one vector component indicating the *average,* and one component *W^{ε,υ}* having *elements with a zero-mean value.* The average norm of the *W*^{*ε*,*υ*}vector component is approximated as: $\overline{\left⌊{W}^{ε , υ}\right⌋} \approx \left⌊{\left[{σ}_{1}^{wε},{σ}_{2}^{wε},…,{σ}_{M}^{wε}\right]}^{T}\right⌋$ (4) where *σ^{we}* is the standard deviation of the *i^{th}* element of *W^{ε},* and *Mᵢₙ* is the number of inputs of the neuron.

The standard deviation of any element of the *W^{e,v}* vector, σ*ᵢ^{we}*, is approximated as: ${σ}_{i}^{wε} \approx {σ}_{i}^{wε 0} \sqrt{N}$ (5) where *σᵢ^{we0}* is the variance *σᵢ^{we}* under assumption of |*W^{e,v}*|=0, and *N* is an estimation for the number of *superposed* distributions. Hence, in a view of (3), *σᵢ^{we0}* can be expressed as: ${σ}_{i}^{wε 0} = η {\left(\frac{1}{P}{\sum }_{r = 1}^{V} {\left({R}^{r}-f\left(W⋅{X}^{r}\right)\right)}^{2} f ′ {\left(W⋅{X}^{r}\right)}^{2} {\left({X}_{i}^{F , r}\right)}^{2}\right)}^{\frac{1}{2}}$ (6)

The number *N* is approximated as the difference between the weighted neuron input that is required to obtain the target response and the actual weighted input: ${\left.N\approx {f}^{- 1}\left(R\right)-W⋅X\right|}_{{W}^{ε , υ , 0} = 0}$ (7)

### Manufacturing Process Parameters

The deviation of the actual weighted neuron input and the weighted neuron input required to obtain the target response is affected by any deviation of individual device parameters of the (active or passive) devices forming the elements (input circuits, synapses, neurons etc.) of the neural network resulting from the manufacturing process. The manufactured process parameters space of devices forming the neural network can be defined as *p_{z}∈{p₁, ...,p_{g}} ∈ Ω* as: ${p}_{z} = {μ}_{p , z} + {σ}_{p}^{wε 0} \left({ψ}_{z}\right) ⋅ p \left({ψ}_{z}, θ\right)$ (8) where *µ_{p,z}* is the mean value of the designable parameter *p_{z}, p(ψ_{z}, θ)* is the stationary stochastic process corresponding to parameter *p* of an element z (such as a transistor) of the neural network, *ψ_{z}* denotes the location of element z on the die on which the neural network is formed with respect to a point origin, *θ* is the die on which the element lies, and *Ω* is the space of parameters reflecting the process fluctuations for the element.

The yield is defined as the percentage of manufactured circuits that meets all the desired specifications: $y \left({d}_{syn}\right) = E \left\{y\left({d}_{syn}, {p}_{z}\right)∨pdf\left({p}_{z}\right)\right\}$ (9) where *E*{.} is the expected value, and each vector *d_{syn}* has an upper and lower bound determined by the technological process variation of parameter *p_{z}* with probability density function *pdf(p_{z}).* The designable variables *d_{syn,r}, r =* 1, ... , *v_{d}* (e.g. bias voltages and currents, transistor widths, lengths, resistances, capacitances, etc.) of each synaptic element of the neural network are denoted by the vector *d_{syn} ∈D,* where *D* is the designable parameter space.

The total area of the synaptic circuit can be defined as *A_{total,syn} = Σₖ* (*xₖA_{k,syn}*), where *A_{k,syn}* is the area of a transistor or a discrete component (e.g. capacitor), which constitute synaptic element or primitive for k transistors or discrete components in the synaptic circuit, and x is the designable element sizing factor (*x*≥1). Without the loss of generality, the optimization problem is formulated as a design point that minimizes the total power *P_{total,syn}* (of specific synaptic element or primitive, a sub-group of synapses or synaptic switchbox, or all synapses in the neural network accelerator) over the designable variables *d_{syn}* with lower bounds *aⱼ,* and upper bounds *bⱼ,* for 1≤*j*≤*m* in the design space *D,* subject to a minimum yield requirement *y* with bound *ξ*, under specific circuit sizing: $\begin{matrix}{min}_{{d}_{syn} ∈ D \left({P}_{total , syn}\right)} {P}_{total , syn} \left(d\right) \\ subject to \\ {a}_{j} \leq {d}_{syn} \leq {b}_{j} 1 \leq j \leq m \\ y \left({d}_{syn}, {p}_{z}\right) \geq 1 - ξ {Vd}_{syn} ∈ D \left({P}_{total , syn}\right) \\ 1 \leq {x}_{k} {V}_{k} \left\{1,2, ... ,q\right\}\end{matrix}$ (10)

For example, parameter *d_{syn}* may be selected as current and equation (10) used to calculate minimum power with yield above a specified value.

Equation (10) can be extended to derive the minimum (synaptic) power for specific performance, while including the impact of area dimensioning. This, multi-criteria, power per area (PPA) metric is defined as an optimization problem as: $\begin{matrix}{min}_{{d}_{syn} ∈ D \left({P}_{total , syn}\right)} {P}_{total , syn} \left(d\right) \\ subject to \\ {a}_{j} \leq {d}_{syn} \leq {b}_{j} 1 \leq j \leq m \\ y \left({d}_{syn}, {p}_{z}\right) \geq 1 - ξ {Vd}_{syn} ∈ D \left({P}_{total , syn}\right) \\ 1 \leq {x}_{k} {V}_{k} \left\{1,2, ... ,q\right\}\end{matrix}$ (11)

### Primitive Components

The design of integrated circuit implementations of mixed-signal (spiking) neural networks (such as ASICs) may be efficiently performed using certain primitive components. The definition of the primitive components is based on the relevant functionality of the component. The signals and layouts of the circuit are done with consideration of the local and global interconnection structures that can be realized in an automated fashion.

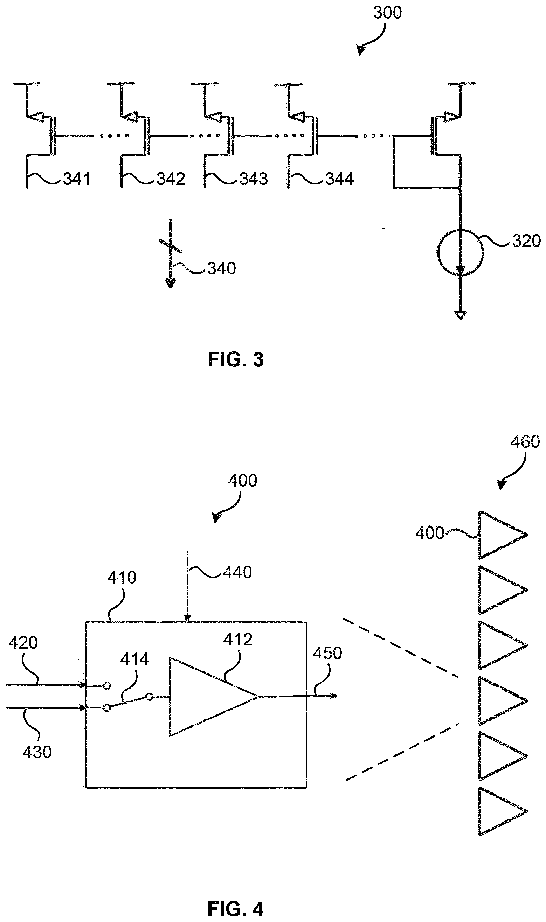

Control Current Divider: Control currents for the circuit are generated from reference generators such as Bandgap reference circuits. The control currents may be scaled in D/A converters and then distributed to the primitive components. The granularity of distribution is dependent on the use-case definition. FIG. 3 is a simplified schematic diagram of an example of a control current divider primitive 300. In the primitive 300, an input control current (e.g. used for control of the behaviour of input shaping circuits or neurons) represented as current source 320 is replicated in multiple branches generating output currents 341-344.

Input Shaping Circuits: An input shaping circuit receives either an external signal from outside the neuromorphic array or a feedback signal from the neuromorphic array. The input shaping circuit transforms the input signal (e.g. an input current or voltage signal) into an output current signal based on a (static) control signal. For example, an input shaping circuit may convert an external input signal into a spiking current output signal. FIG. 4 is a simplified schematic diagram of an example of an input shaping circuit primitive 400. The primitive 400 comprises an input shaping circuit 410 with functional circuit 412 and input selector 414 for selecting one of inputs 420, 430, control input 440 and output current 450. The primitive 400 is preferably designed so that multiple input shaping circuit primitives 400 can be abuted in an integrated circuit layout, i.e. electrically connected without intervening circuit elements between the primitives (particularly active circuit elements such as transistors) to form a group of input shaping circuits, such as a column of input shaping circuit primitives 460.

Synapses: The synapses can also receive an input signal from an input shaping circuit or as a feedback current from neurons or other synapses in the neurosynaptic array. The synapses may transform the input current using some a linear time-invariant function based on the weight value(s) of the synapse. The synapses can either route the current to a column or a row of the neural network array or both column and row.

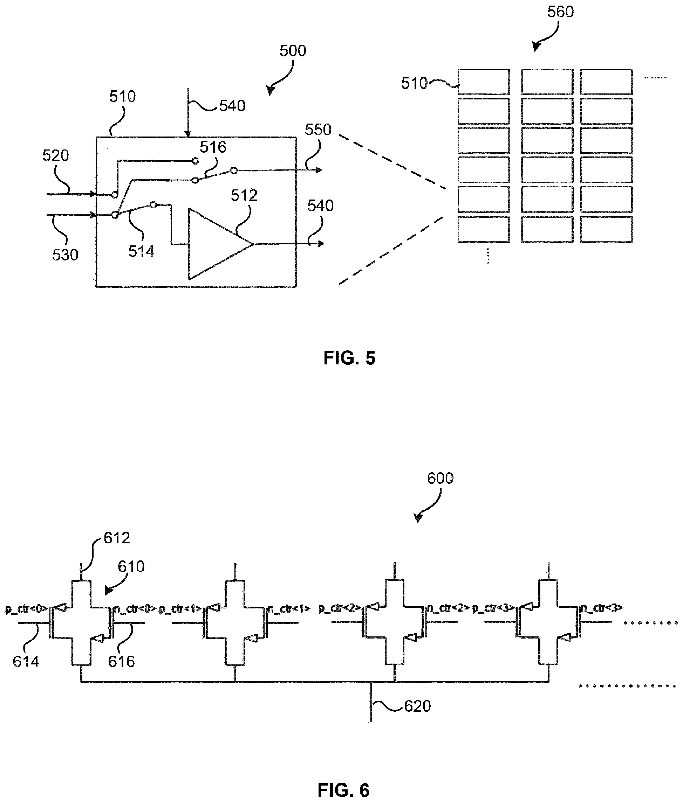

FIG. 5 is a simplified schematic diagram of an example of a synapse primitive 500. The primitive 500 receives input current signals 520, 530 and generates output current signal 540 by applying a configured function (e.g. a linear time-invariant function) in circuit 512 to a selected one of the input signals 520, 530, or generates output signal 550 bypassing circuit 512. Control signal 540 controls operation of the synapse 510. The primitive 500 is preferably designed so that multiple synapse primitives 500 can be abutted in x- and y-directions in an integrated circuit layout without intervening circuit elements to form an array of synapses 560.

For example, input 520 may be an external input such as a spike current from an Input Shaping Circuit, and input 530 may be a feedback current coming from a neuron, the switch 514 selecting one of the inputs for input to the core logic 512 of the synapse 510. The configured function of circuit 512 is then applied to the connected input current and is then output as synapse output 540 to a column line of the neural network array. Switch 516 may be used to connect one of the inputs 520, 530 to an output current 550 in the neural network array, providing additional connectivity possibilities in the array.

As an example, four of the synapses 510 may be arranged in a 2x2 array forming 2 rows and 2 columns of synapses. Switch 514 in each synapse selects external input 520, switch 516 in the first synapse in each row also selects external input 520 and outputs to output 550, and output 550 of the first synapse in each row is connected to external input 520 of the second synapse in each row. In this way, each synapse 510 in a row receives the same external input 520, e.g. from an input shaping circuit, thus forming a row conductor (row line). The outputs of the synapses in each column are connected together, e.g. via a column conductor (column line).

Switch-boxes: A switch-box interconnect circuit directs current from one or more selected rows or columns of a neural network (sub-)array to a different row or column respectively of a different neural network (sub-)array, or to a particular neuron. The goal is to be able to create programmable connectivity across the synapse cross-bar, and also programmable connectivity from the cross-bar to the neurons. In addition, a feedback current from the synapse cross-bar to itself can be controlled through a switch-box, i.e. current from one or more selected rows or columns of a neural network array to a row or column respectively in the same neural network array.

FIG. 6 is a simplified schematic diagram of an example of a current-mode switch-box primitive 600 comprising multiple switches 610 each receiving a current input 612. Control signals 614, 616 control each switch 610, for example in this embodiment digital signals p_ctr and n_ctr control p-type and n-type transistors respectively that form each switch 610. The control signals 614, 616 control each switch 610 to control whether a particular input current 612 will be summed up into the output current 620. In this way a certain input current 612 may be selected as the output current 620, or a selected set of one or more inputs currents may be summed together to form the output current 620. The switches 610 may be arranged to form a hierarchical switching circuit, i.e. with the output current from one or more groups of switches 610 forming the input current(s) to another group of switches.

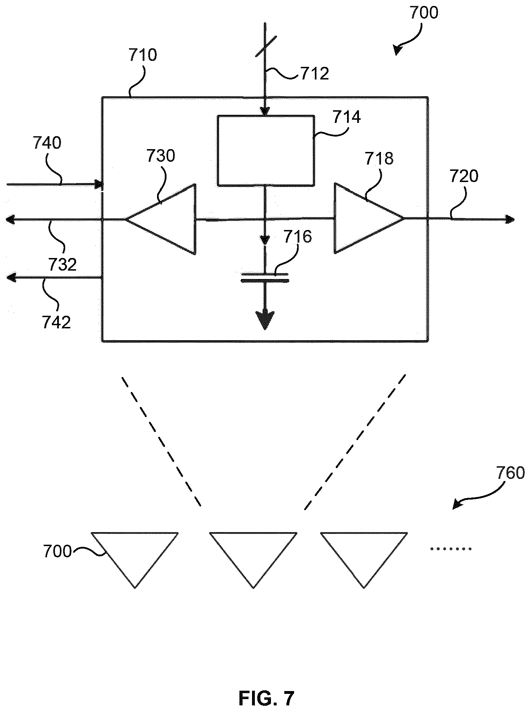

Neurons: The neurons perform integration of a synapse column current and apply the multiple firing threshold based on the programmed dynamics of the neuron. The behaviour of the neuron is controlled via the control current routed to the neuron. The neurons can create a feedback current, which may for example be routed via a switch-box to an input shaping circuit or a synapse. The neurons may feedforward the current and pass it to another column for addition, and/or may integrate and create spikes based on the designed dynamics. FIG. 7 is a simplified schematic diagram of an example of a neuron primitive 700 and a row of neurons in forming a neuron array 760. The neuron 710 receives one or more input currents 712 as inputs to current-mode switch box circuit 714, which selects one of the input currents and outputs the selected current to an integration circuit, shown as capacitor 716 in this embodiment. When the integrated input current reaches a configurable threshold, an output circuit 718 outputs a spike output 720 from the neuron. The neuron may generate a feedback current 732 via output circuit 730, which may for example be routed via a switch-box to an input shaping circuit or a synapse, or feedforward current 734 to be routed via a switch-box to another synapse column for addition. The behaviour of the neuron 710 is controlled via the control (current) signal 720 routed to the neuron.

Multiple current can come into the input of a neuron and a current mode switch 712 can be integrated inside the neuron 710 to get one output current. This current in either integrated and passed through some logic to create an output spike or it can be used as a feedback current when connected back to the synapse array with another current mode switch.

### Design Methodology

The following describes a design methodology for designing a neural network for implementation in an integrated circuit, using primitive components such as those described above. The design methodology utilizes a number of design inputs as described below.

Number of Networks: A single design may comprise mapping flexibility of multiple networks running with a set of defined inputs, outputs and connectivity distributed over time and/or space. This information is needed to generate a network.

Primitive Component Count and Type: For each use case or application of the neural network, different types of primitives as well as subtypes may be needed (for example, subtypes may include neurons with different time constraint parameters). The count of each particular type of primitive is needed for design generation.

Primitive Component Connectivity: The connectivity between the primitive components is needed to generate a particular structure which is feasible from a device layout perspective. This connectivity information may be used to select the correct modular primitives.

Performance Optimization Metric - Area: A maximum die area target of the integrated circuit to achieve for the generated design needs to be known. The flexibility in the target and whether it's a hard constraint or soft constraint is also preferably defined.

Performance Optimization Metric - Power: Each integrated circuit design is characterized by a power specification. The overall neural network target power specification needs to be provided specifying a maximum power consumption. A target flexibility range and constraint type (hard or soft) is preferably provided.

Yield Target: The integrated circuit manufacturing yield target for a given design needs to be provided specifying a minimum yield of functioning devices per die. There are use case network generation level possibilities which improve the yield up to a certain level. For example, yield can be improved in the way a network is trained, mapped or implemented using primitives. Each hierarchy of design cycle has a trade-off between die area and power. As an example, in the network training and design, simple improvement can be averaging multiple columns of current before making an inference in more error-prone layers such as the output layer. This might lead to the die area increasing quite a lot. Another alternative can be improving the yield by increasing the area of the primitive itself.

Robustness and Reliability: To guarantee a certain lifetime of operation, redundancy in the available resources of the neural network need to be provided to enable mapping configuration swaps when primitive components fail over time. This specification needs to be provided to correctly provide redundant resources at correct network locations.

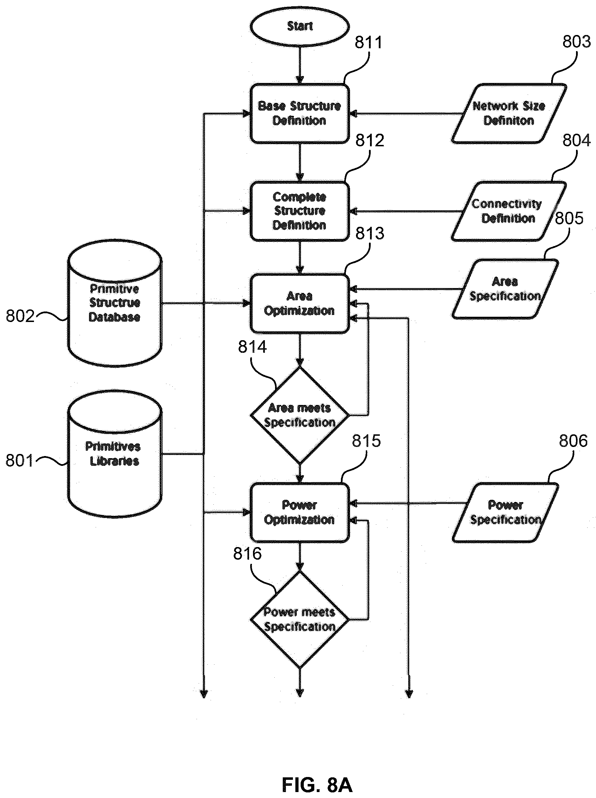

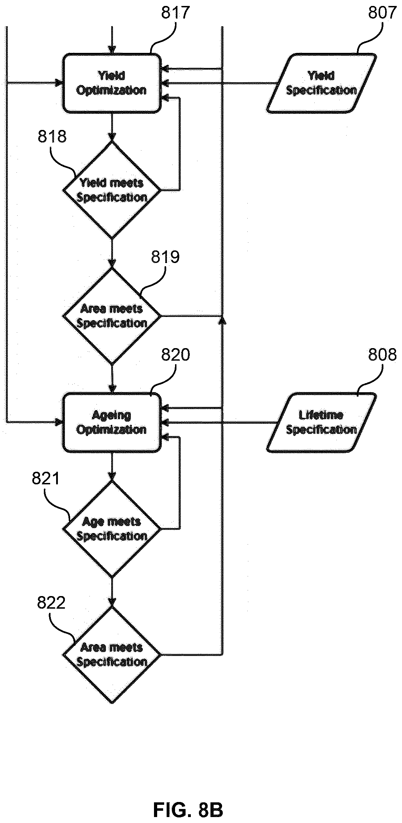

The flowchart shown in FIG. 8A and 8B describes a sign-off methodology for use-case driven deep neural network designs using modular analog current-mode primitives.

The design database is loaded with the information of primitive libraries 801 and primitive structures database 802.

In step 811, the design specifications such as network size 803 (number of networks, primitive count and types) are taken to create a base network definition.

The network connectivity definition 804 is then taken to create a complete network definition in step 812. This includes the instantiations of correct crossbar switch and control current splitter primitives.

Based on the area specification 805 provided, an area reduction is performed in an area optimization step 813. This step is iterated by reducing area incrementally until the area specification is met (step 814). This may involve reducing the size of the individual circuit elements, e.g. the transistors, and/or of the overall layout of the neural network, which may impact the neural network performance in terms of accuracy.

Based on the power specification 806 provided, a power reduction is performed in a power optimization step 815. This step is iterated by reducing the power specification until the power specification is not met (step 816) This may be accomplished by reducing the operating voltage or current of the active elements, e.g. the transistors, of the neural network, which may result in an increase in die area of the individual devices and the network (which may then require another area optimization loop since it may be necessary to increase the change the area of the circuit elements to achieved the desired neural network accuracy. The area optimization can be repeated after power optimization by repeating steps 813 and 814 as described above (this option is not shown in the flow chart).

Based on yield specification 807, an optimization cycle is done to update the network design to meet the yield target (steps 817 and 818). This may involve, for example, increasing the size and/or increasing the operating voltage of certain circuit elements of the network, e.g. certain of the transistors, and this may result in an increase in die area. It may involve reduction in operating current for reducing electromigration.

Based on the updated design as a result of these optimizations, an iteration might be needed of the area, power or yield optimization cycles by repeating the optimization steps described above. For example, if the area specification is not met (step 819) after the power and yield optimizations are performed, the area optimization steps 813 and 814 may be repeated, and the subsequent steps 815 and 816 (power optimization), steps 817 and 818 (yield optimization) may also be repeated.

Based on the lifetime specification 808, an optimization cycle is done to update the network design to meet the ageing target in steps 820 and 821. For example, the ageing target may comprise a minimum functional lifetime of elements of the network, e.g. the transistors. The deeper layers in the network may be more prone to error when some forms of encoding are used, as an example. This type of error can arise for various reasons, such as a manufacturing defect or a defect that arises as a result of ageing of the integrated circuit. To mitigate such issues, the network topology and primitives used in the deeper layers can be optimized at the cost of area and power.

Based on the updated design, iteration might be needed for area, power, ageing or yield optimization cycles. For example, if the area specification is not met (step 822), the area optimization steps 813 and 814 may be repeated, and the subsequent steps 815 and 816 (power optimization), steps 817 and 818 (yield optimization), and steps 820 and 821 (ageing optimization) may also be repeated.

### Layout Automation Methodology

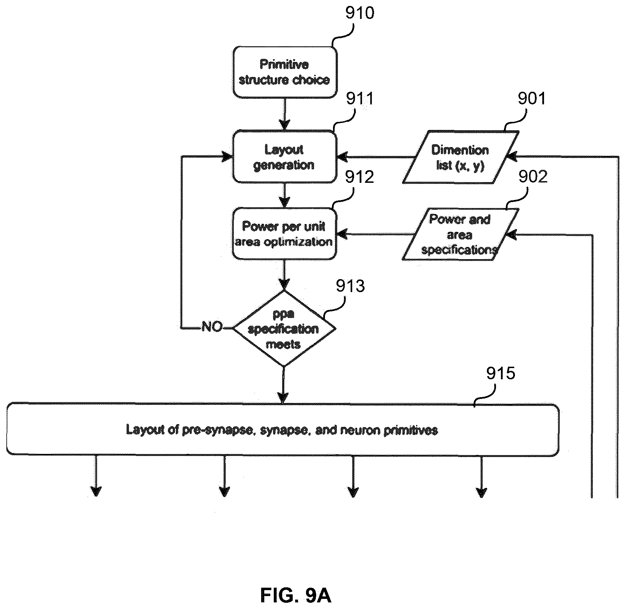

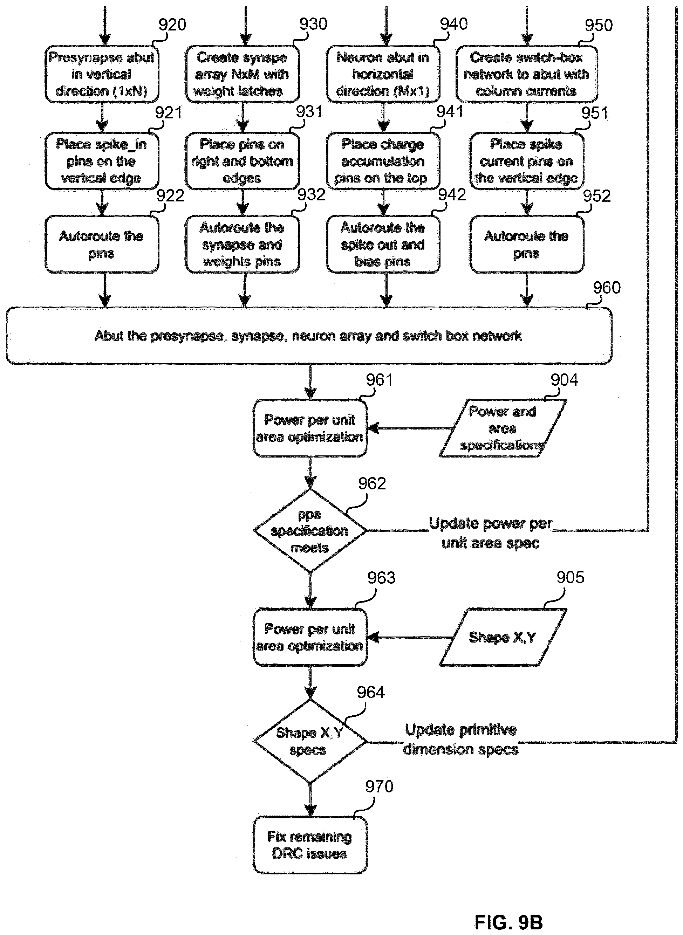

The layout methodology relates to how the primitives may be combined to form different structures for implementing a neural network. There are multiple possibilities for combining the primitives and for making a larger array using smaller (sub)arrays while adhering to design principles and optimizing the design considerations. FIGs. 9A and 9B show a flowchart of a design method for generating a layout of a neural network using primitives for an NxM synapse array.

### Automated layout generation of primitive components:

Automatic generation of the layout of the primitives is necessary in practice as there are multiple versions of each primitive for various trade-offs such as yield, area, and power consumption. This is the most difficult task to perform manually and is thus preferably at least partially automated. In order to automatically generate the layout of the primitives, there are three challenges that need to be resolved: 1) gate ordering, 2) placement of PMOS and NMOS devices (in common centroid way) and 3) routing.

Gate Ordering: In principle, an ideal gate ordering maximizes the sharing of drain/source areas between adjacent transistors, resulting in minimal cell and net area. The concept of Euler paths from graph theory is used to determine these ideal gate orderings. This step is necessary for an optimized layout for minimum area, minimum power, or minimum power per unit area. In order to generate a symmetric layout, the size need to be well adjusted to meet various optimization parameters.

Placement of devices for common centroids arrangement: Once the gate ordering is decided, the required matched devices are identified and placed in a way that the geometric centroids coincide. The identified devices are split into smaller segments (fingers) and interleaved in a pattern. This ensures that variations across the die impact all devices equally. Additionally, at this stage the x-y size of the primitives is adjusted to meet the area requirement.

Routing: After deciding on the gate ordering and the placement of devices is decided, the locations of input/output pins (to be connected to the devices) are determined. Maze routing methodology is chosen for ease of implementation. To minimize the routing area, the Dijkstra's shortest path routing algorithm may be used to find the shortest path between the start and the end points. To achieve a symmetric layout, this flow may be merged with custom routing for important signals.

Steps 910-913 in FIG. 9A show the steps described above, performed for each of the primitives to be used in the neural network. For each primitive to be used (e.g. the presynapse/input shaping circuit, synapse, neuron, and switch-box circuit primitives), a basic primitive structure is selected from a library of primitives (step 910), a circuit layout is generated for that primitive (step 911) using the dimension list (x, y specifications) 902, a power per unit area (PPA) optimization is performed (step 912) using the power and area specifications 903. The primitive layout is tested to see if it meets the PPA specification (step 913) and the layout generated in step 911 is adjusted if necessary and the PPA optimization step 912 performed again until the power and area specifications are met.

Once a library of primitive layouts are generated, the automatic layout generation of a modular NxM array is the next challenge, shown in steps 915 and onwards in FIGs. 9A and 9B. The trade-off parameters are used for the primitives, now these parameters also need to be optimized while generating the layout of a NxM array. An additional challenge is design and layout of the interconnects while generating the layout of the neural network array.

The generated primitives are assembled into the full neuromorphic array with a current-mode based interconnect, which may be implemented as a "switch-box" circuit as described herein. A neuromorphic array requires a dense network of interconnects for neuron-synapse communication, and use of a current-mode interconnect (switch-box) helps reduce power dissipation, improves speed and noise robustness, and addresses scalability challenges. Additionally, the primitives may comprise current branching in excitory and inhibitory currents, making a current-mode based interconnect advantageous.

A big advantage of a current-mode based interconnect is that it does not require any buffering typically used with voltage signals for long interconnects. Voltage buffers are usually power hungry and prone to generating noise, and also consume die area (increasing chip cost). A current-mode based interconnect is less affected by voltage noise and crosstalk, making it more robust in noisy environments. The inhibitory and excitory current-mode signals are differential in implementation, which further enhances noise rejection. The current branches at the boundaries of the primitives can abut with a neighbouring primitive current branch, resulting in a scalable design which can extend over a long distance without introducing issues regarding noise, crosstalk, etc. In the switch-box interconnect based neuromorphic array, the current-mode signalling enables efficient current summation and communication. The current-based neural network and primitive layout methodology combine to provide an improved layout for a neuromorphic array.

Another challenge is to design an optimized power delivery with low noise that directly impacts performance, energy efficiency, and reliability. The neuromorphic array has a hierarchical power delivery network with a global power grid for delivery power across neuromorphic array with low IR drop. On top of the global power grid there is a local power delivery gird for each primitive and each segment of the array resulting in energy efficiency, noise resilience and scalability.

The steps to generate the layout of a NxM array along with optimized layout of primitives and optimized power per unit area specification is shown in steps 915 onwards in FIGs. 9A and 9B. The layout generation of the array involves four processes:
- Nx1 pre-synapse (e.g. input shaping circuit) array layout generation using a pre-synapse/input shaping circuit primitive, shown in steps 920, 921 and 922;
- NxM synapse array layout generation using the synapse and weight register primitive, shown in steps 930, 931 and 932;
- 1xM neuron array layout generation using a neuron primitive, shown in steps 940, 941 and 942; and
- Switch-box circuit layout generation using a switch-box primitive, shown in steps 950, 951 and 952.

In step 960, the layouts generated in steps 920-952 are assembled by arranging the Nx1 pre-synapse (input shaping circuit) layout, NxM synapse array layout, Mx1 neuron array layout, and the switch-box circuit primitive adjacent to each other to form the layout for the neural network. The synapse array layout of current-mode synaptic elements, each with an input and an output and adapted to apply a weight to an input current to generate a synapse output current. The synapses are arranged in rows and columns of the array, and the synapses in each row have their inputs connected to a row line and the synapses in each column have their outputs connected to a column line.

The pre-synapse layout is arranged adjacent to the synapse array layout so that the outputs of the input shaping circuits align with row lines of the synaptic element array with no active circuit elements electrically connected between the outputs of the input shaping circuits and the inputs of the synaptic elements. The switch-box circuit primitive is arranged adjacent to the synapse array layout with the inputs of the switch-box circuit primitive aligned with the column lines of the synaptic element array primitive, and with no active circuit elements electrically connected between the outputs of the synaptic elements and the inputs of the switch-box circuit. The neuron row layout is arranged adjacent to the switch box-circuit primitive with the outputs of the switch-box circuit primitive aligned with the inputs of the neurons of the neuron row primitive, and with no active circuit elements electrically connected between the outputs of the switch-box circuit primitive and the inputs of the neurons.

The generated array is tested (step 962) to see if it meets the network power and area specifications 904. If not (step 963), the parameters for primitive layout generation (e.g. primitive power and area specifications 903) are adjusted and the flow is iterated accordingly. Then the array is tested (step 964) to see if it meets the shape (x, y) specifications 905 (which may be a repeat of ppa specification. If not, the parameters for primitive layout generation (e.g. primitive dimension list (x, y) specifications 902) are adjusted and the flow is iterated accordingly.

Since the entire process may be fully automated using custom scripts and EDA tools, these iterations can be executed efficiently until the design meets the required specifications. This automation ensures a streamlined, adaptive optimization process, and enables rapid convergence to a suitable layout.

The design flow shown in FIGs. 9A and 9B may be used to generate various modules of an array, which can then be assembled in different configurations to create a larger, modular array using these modules. A key advantage of this approach is that the current-mode-based interconnect (switch-box circuit) enables seamless scalability, allowing smaller arrays to be combined efficiently to form larger arrays. This modular design not only enhances flexibility in system architecture but also optimizes power per unit area. Additionally, the ability to arrange smaller arrays in multiple ways provides greater adaptability, enabling the creation of customized structures, as detailed in the following.

### Primitive Structures Database

The layout of a primitive component is preferably performed in a manner that enables the structure to be scaled. The trade-off is between the number of primitive structures to be made available for use in the design process. This is bounded by the design and verification time on one side and the complexity of the database, which use-case driven design methodology has access to on the other hand. If the database of primitives becomes too large, the search and optimization might not converge or lead to exorbitant design time.

Input Shaping Circuit (ISC) column primitive: A ISC column can be constructed in size of "n" individual input shaping circuits and designed as a primitive component. For constraining the database size and design time, typically the size of ISC column primitives is limited to a number of individual input shaping circuits in the column being a factor of 2 or a power of 2. The control currents for the ISC columns can be designed per individual ISC primitive or per ISC column primitive. The exact requirements for the control current are derived from the use case requirements and supplied from the control current splitter.

Synapse array primitive: A array of synapses can be constructed in a size of NxM. A crossbar structure may be designed by abutting the synapses in x and y direction. In principle, the "N" and "M" can be any value. To account for system level issues and design constraints and time, both m and n are typically limited to a factor of 2 or a power of 2.

Neuron row primitive: A neuron row can be constructed in size of M. For constraining the database size, typically M is a factor of 2 or a power of 2. The control currents for the neuron row are determined by the level of control granularity desired. The granularity can be per neuron primitive or per neuron row primitive. The exact constraint is derived from use case specifications. The number of control currents are derived from control current splitters which are abutted to the neuron rows.

The primitives preferably have built-in features which improve the design.

Interconnect built into each primitive: The primitive components may have a built-in interconnect, as a result of the input/output signal definition being taken into account when designing the layout and structure of the primitive. This simplifies the process of making the neuromorphic array, as constructing larger structures may be designed by simply abutting the primitives with minimal manual changes needed to the design when scaling up the size of the network.

Complementary primitives: The design may utilize primitives having alternate p-type and n-type semiconductor devices for connected primitives, with current-mode signaling used between the primitives.

Power Gating built into the design: With connectivity achieved via current-mode signaling, fine granulated gating of the signal current flow at any feedforward or feedback stage is preferably provided. The design methodology is primarily done to provide maximum use case mapping flexibility. An additional advantage of gating the current paths is power-saving which is built into the design, e.g. by avoiding current leakage from unused synapses into neurons or other circuits.

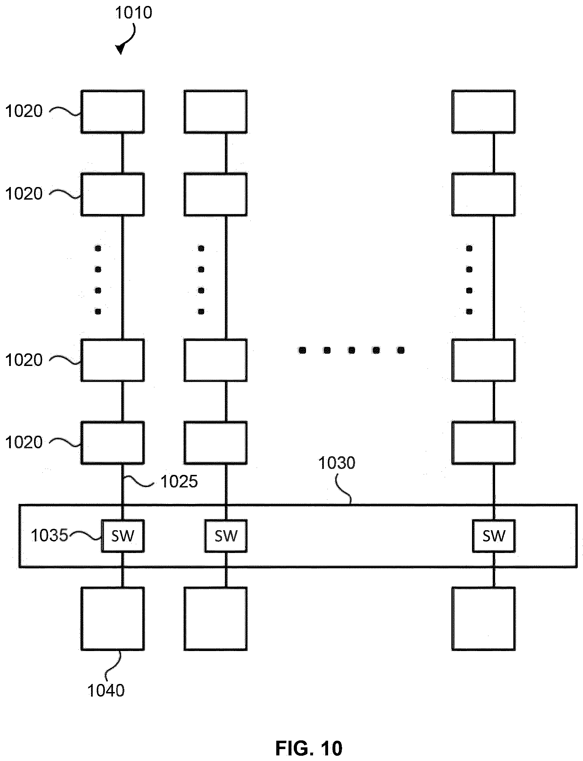

An example is shown in FIG. 10, which depicts a CMOS network, with an array of n-type current-mode synapses 1020 having one or more n-type active devices driving the synapse output current for each synapse. A column 1010 of the n-type synapses 1020 have their outputs connected to a synapse column line 1025 carrying a summed synapse column current. Each synapse column line 1025 is connected via a switch-box interconnect circuit 1030 to a p-type neuron 1040 having one or more p-type active devices receiving the synapse output current. The network could also be implemented with p-type synapses and n-type neurons. The choice of which devices to use in which primitive is driven by the manufacturing technology used and variability of a device in that technology.

The switch-box circuit 1030 includes switches 1035 for power gating, i.e. shutting off the current from each synapse column before entering a neuron, e.g. by disconnecting the synapse column line 1025 from the outputs of the switch-box 1030. A current-mode switch placed between a p-type source of current (e.g. a p-type synaptic element) and a n-type current sink (e.g. an n-type neuron) (or vice versa) can stop the flow of current between the source and the sink. This stopped current flow achieves power gating in the design since the complete current path is stopped by the open switch. This enables distributed power gating as an additional benefit of current mode design.

Different performance (Timing and Mismatch) vs Area and Power: A single primitive described in the above can have different variants used in different parts of the design pipeline (use case driven). Typical trade-offs include different performance for timing or mismatch as a function of different area and power. Some examples of such primitive variants include:
- Gain factors in the Control Current Divider Primitive;
- Different shaping functions in the Input Shaping Circuit Primitive as a function of area and power;
- Filtering built into the Synapse Primitive;
- Different Gain Error of Synapse Primitive as a function of area;
- Different membrane potential time constants for the Neuron Primitive as a function of area;
- Different connectivity enabled in the Switch-Box Primitive as a function of area.

Yield and Robustness vs Area: A single primitive described above can have different yield and robustness (life-time) associated with it traded off with area. All the different primitives are available and used based on the use case driven sign off flow.

Some of the trade-offs in current mode neural network design optimization (they are applicable to any design, but we consider them specifically in context of neural networks design in a die to multi die implementation.)

Power vs. Area: Lower power is often achieved by reducing bias currents and supply voltages. However, lower current levels typically require larger transistors (to maintain transconductance or reduce mismatch) which increases die area.

Area vs. Yield: Larger area analog components (e.g. resistors, capacitors, and large transistors) can improve matching and noise performance, but larger area increases the chance of defects, mismatch, or process variation effects, thus lowering yield.

Robustness vs. Power: Designing for robustness, e.g. performance in view of against PVT (process, voltage, temperature) variations often requires guard bands, overdesign (e.g. higher current) and/or wider voltage headroom. This results in higher power consumption.

Speed vs. Power: Higher speed (e.g., bandwidth or slew rate) often requires higher current and/or lower impedance nodes, and this directly increases power.

Robustness vs. Area: Improved robustness to mismatch or noise is often achieved with larger devices, layout techniques such as common-centroid, guard rings, and/or dummy devices, all of which consume more die area.

Yield vs. Robustness: Robust circuits are generally designed with margins and design-for-manufacturing (DFM) rules, which can help improve yield. However, aggressive robustness (e.g. triplicated structures, heavy redundancy etc.) can increase area and power, reducing yield per wafer (due to cost).

These trade-offs are summarized in Table 1 below:

**Table 1**

| **Parameter** | **Improves** | **May degrade** |
|---|---|---|
| Power ↓ | Yield (less heat), Area (reduced) | Speed, Robustness |
| Area ↓ | Cost, Yield (less defects) | Matching, Robustness |
| Robustness ↑ | Yield, Reliability | Power, Area |
| Yield ↑ | Reliability, Cost | Performance (if over-conservative) |

Techniques to balance the design trade-offs are summarized in Table 2 below:

**Table 2**

| **Technique** | **Trade-off it mitigates** |
|---|---|
| Current reuse / stacking | Power vs. Gain |
| Bias current optimization | Power vs. Robustness |
| Layout techniques (centroid, symmetry) | Area vs. Matching |
| Adaptive biasing | Power vs. Performance |
| Device sizing / segmentation | Matching vs. Area |
| Calibration (digital trimming) | Yield vs. Area/Power |

### Neuromorphic Array Designs

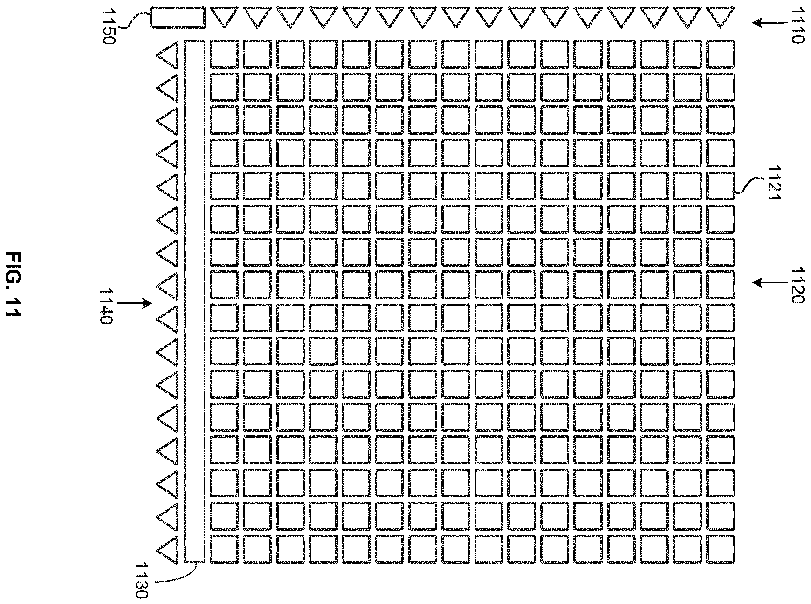

FIG. 11 is a schematic diagram of a neuromorphic array (e.g. a spiking neural network) comprising 16 input shaping circuits 1110, a 16x16 array of synaptic elements 1120, a Switch Box 1130, 16 output neurons 1140, and Control Current Splitters 1150. This is a base design example of the modular current-mode design methodology. The array implements a complete cross-bar with 16 array inputs connected to individual input shaping circuits 1110. All-to-all connectivity is provided by the 16x16 synapse array cross bar (with synapses connected in 16 rows and 16 columns) between the 16 input shaping circuit primitives 1110 and 16 output neuron primitives 1140.

A control current splitter 1050 generates separate control currents for control of the 16 input shaping circuits, for control of the synapses and/or for control of the 16 output neurons. A switch-box primitive 1130 has been implemented between the neurons and the synapse array cross-bar having multiple switches to route any column current (i.e. the sum of synapse output currents for the synapses of a column) to any neuron via an output of the switch-box. Each switch is connected to receive synapse output current from a subset of the synapses 1120 (e.g. a column of synapses), and the switch-box selectively routes the received synapse output current to one of the switch-box outputs, connected to one of the neurons 1140.

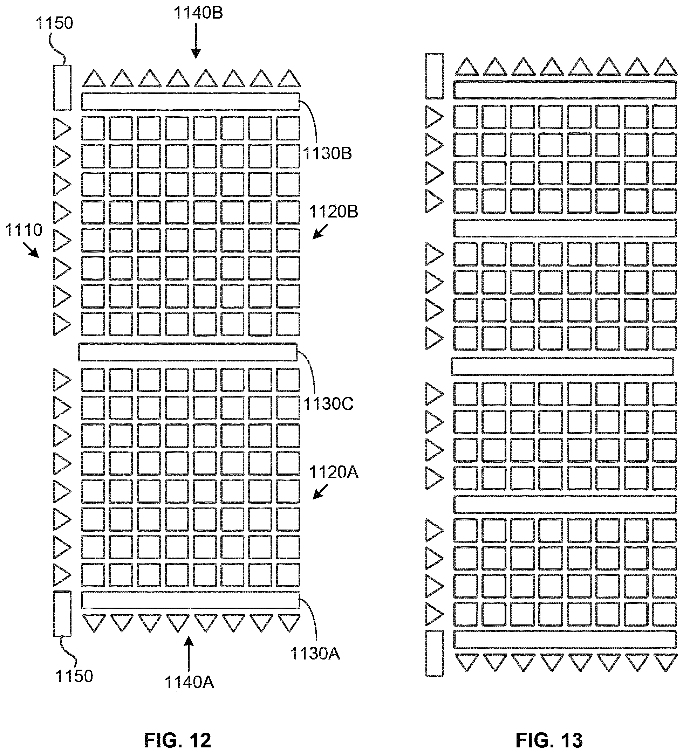

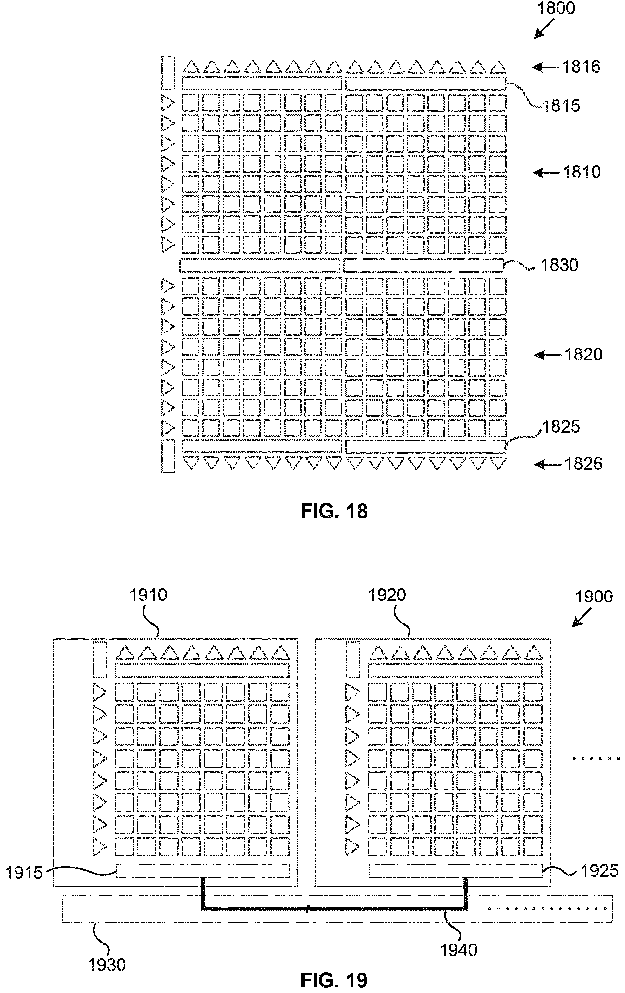

Input vs Output count trade-off flexibility: A trade-off in creating a generic neuromorphic array for use in various use cases is the flexibility of varying the number of input stages to the number of output stages with the synapse cross-bar connectivity supporting multiple options. In comparison to the neuromorphic array shown in FIG. 11, in the array of FIG. 12 the synapse cross-bar area is cut in half (i.e. half the number of synapses) but with the same number of inputs and outputs maintained by arranging the synapses in two sub-arrays and adding a switch-box primitive interposed between the two sub-arrays (note that the same symbols used in FIG. 11 are also used in FIGS. 12-17). The neurosynaptic array of FIG. 12 design a 16x8 synapse array divided into two sub-arrays 1120A and 1120B, 16 input shaping circuits 1110, 16 output neurons 1140A, 1140B divided in two rows, two control current splitters 1150, and three switch-boxes 1130A, 1130B and 1130C. In another example, the neuromorphic array of FIG. 18 has the same area array as the array of FIG. 11 but with the possibility of double the number of neurons at the cost of half the number of inputs.

Switch-box 1130A selectively connects a column line, connected to the outputs of a column of synapses of sub-array 1120A, to one of its switch-box outputs connected to one of the neurons 1140A in the bottom row (similar to the array of FIG. 11). In the same way, switch-box 1130B selectively connects a column line, connected to the outputs of a column of synapses of sub-array 1120B, to one of its switch-box outputs connected to one of the neurons 1140B in the top row. Switch-box 1130C is interposed between sub-array 1120A and 1120B, and is configured to selectively connect a column line, connected to the outputs of a column of synapses of sub-array 1120A, to one of its switch-box outputs connected to one of the columns lines connected to the outputs of a column of synapses of sub-array 1120B.

Further flexibility in the number of synapses and input shaping circuits dedicated to a particular neuron can be achieved by adding more switch-boxes used to divide the synapses into four (or more) sub-arrays as shown in FIG. 13. In the switch-box between the sub-arrays, each switch is connected to receive synapse output current from a subset of the synapses (e.g. a column of synapses) of one sub-array and selectively routes the received synapse output current to one of the switch-box outputs, which is connected to a subset of the synapses (e.g. a column of synapses) of the other sub-array. This enables the switch-box to route the synapse output current from one column in one sub-array to a selected column in the other sub-array, summing the synapse output current from the two columns.

An additional benefit of splitting the rows of synapses into separate sub-arrays using switch-boxes is the ability to route synapse currents from one or more columns of one sub-array into a selected column of another sub-array using the switch-box. For example, this enables to converge synapse currents from multiple columns of one sub-array into a column of another sub-array.

The switch-boxes can also be used for complete gating (disconnect) of synapse currents in one or more columns of a sub-array when those columns are not used for a certain application of the neuromorphic array, thereby reducing the static power consumption by a large factor based on utilization.

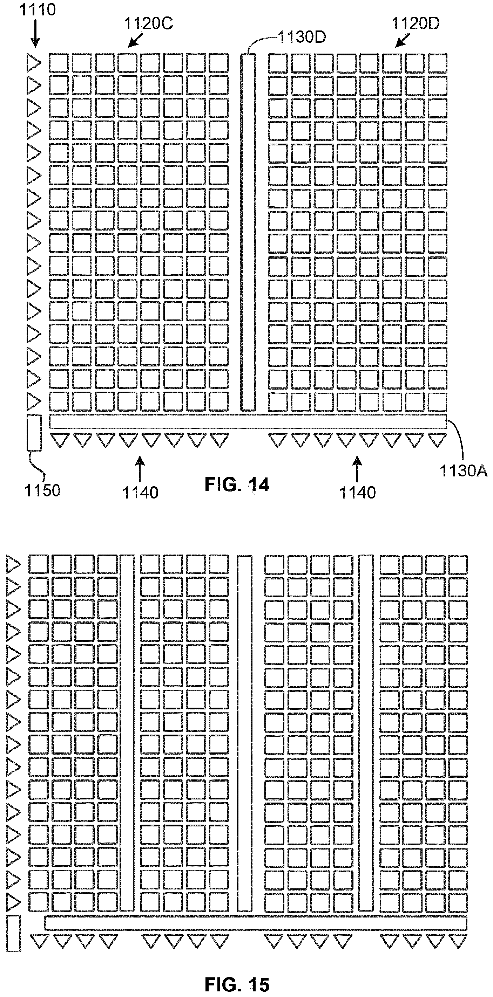

Expanding connectivity across synapse rows: For the purpose of routing current flowing across a row of synapses in the horizontal direction, vertical switch-boxes can be used as shown in the example of FIG. 14. The neurosynaptic array of FIG. 14 has a 16x16 synapse array divided into two subarrays 1120C and 1120D, 16 input shaping circuits 1110, 16 output neurons 1140, and 2 control current splitters 1150. A horizontal switch-box 1130A selectively connects a column line, connected to the outputs of a column of synapses, to one of the horizontal switch-box outputs connected to one of the neurons 1140 (similar to the array of FIG. 11). A vertical switch-box 1130B selectively connects a row line of subarray 1120C (connected to the inputs of a row of synapses of sub-array 1120C), to one of the vertical switch-box outputs connected to one of the row lines of subarray 1120D (connected to the inputs of a row of synapses of sub-array 1120D).

In the vertical switch-box 1130D, each switch is connected to receive one of the input currents from one of the input shaping circuits 1110 (e.g. the row current from an input shaping circuit 1110 connected to the inputs of all the synapses in the row in sub-array 1120C). The vertical switch-box 1130D is configured to selectively route the received input current to one of its switch-box outputs, which is connected to a row in sub-array 1120B. This connects the input current from one of the input shaping circuits 1110 to the inputs of all the synapses in one row of sub-array 1120B and a selected row of sub-array 1120C.

Multiple switches in the vertical switch-box 1130D increase the mappings possible from a single row in sub-array 1120C to another row in sub-array 1120D to increase the utilization of the synapse cross-bar.

The neurosynaptic array of FIG. 15 provides further division of the synapse array. The FIG. 15 array has a 16x16 synapse array divided into four subarrays, 16 input shaping circuits, 16 output neurons, and a control current splitter. A horizontal switch-box selectively connects column lines of the sub-arrays to neurons as described for the arrays of FIG. 11-14, and four vertical switch-boxes connect row lines of the sub-array on one side of the vertical switch-box to a selected row line of the sub-array on other side of the vertical switch-box, as described for the array of FIG. 14.

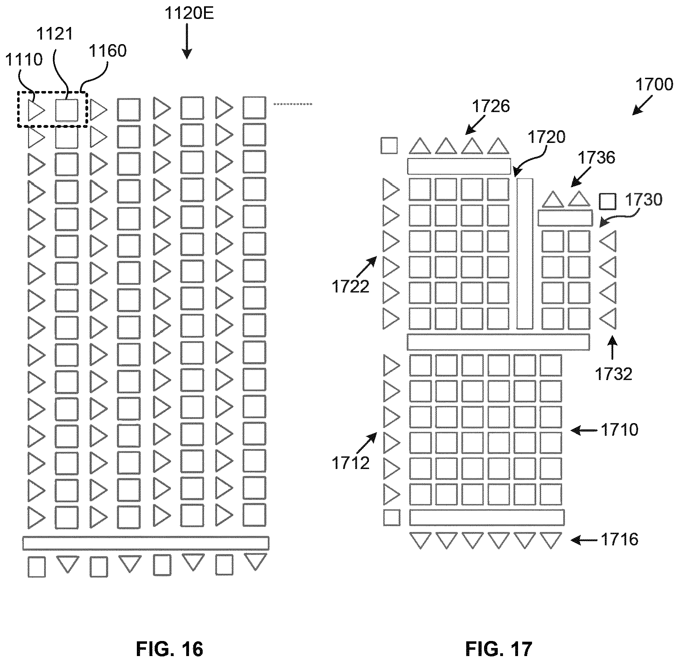

Input shaping circuits and synapse as joint primitive in a cross-bar: In one of the extreme settings for the synapse cross-bar (e.g. the basic arrangement of FIG. 11), the array can be constructed as shown in FIG. 16. The array 1120E is constructed of joint primitives 1160, each comprising a combination of an input shaping circuit 1110 and synapse 1121 designed as a joint primitive 1160. Each of such columns can have their own control current splitter for maximum input controllability.

Resource Optimization: The neurosynaptic array may be optimized for a particular neural network application. Typically the input layer of a neural network has a higher number of inputs and synapses, the middle layers have fewer inputs and synapses, and the output layer has the least number of inputs and synapses. The neurosynaptic array 1700 of FIG. 17 comprises a 6 x 6 array 1710, a 6 x 4 array 1720, and a 4 x 2 array 1730. A typical neural network consists of multiple layers of mapped input-output connectivity. As an example, in some networks the input layer (usually the first layer) has a large fan-in, with a relatively large number of neurons and a relatively large number of inputs to each neuron of the input layer, e.g. layer 1710 with 6 neurons 1716 each with 6 inputs 1712. The middle layer (or layers) might have a high connectivity count of synapses, e.g. layer 1720 with 4 neurons 1726 each with 6 inputs 1722. And the output layer (usually the last layer) may have relatively few output neurons (i.e. fewer than the input and middle layers) as there are often only a few inference classes, e.g. layer 1730 with 2 neurons 1736 each with 4 inputs 1732. The array implementation shown in FIG. 17 is tailored to this type of network, making a trade-off between input, middle and output layers.

FIG. 18 shows a neurosynaptic array 1800 with 16 inputs, a 16 x 16 array of synapses and 32 neurons. The array is divided into two separate smaller 8 x 16 subarrays 1810 and 1820. The first subarray 1810 has a switch-box circuit 1815 connecting to 16 neurons 1816, and the second subarray 1820 has a switch-box circuit 1825 connecting to 16 neurons 1826. This arrangement provides a greater number of neurons relative to inputs compared to the arrangement in FIG. 11, i.e. twice as many neurons as inputs. The two subarrays 1810, 1820 are connected by switch-box circuit 1830 that comprises switches for selectively connecting a column line in array 1810 with one of the column lines in array 1820.

The embodiments of the current-mode neural network described herein and shown in FIGs. 11-18 may be implemented as an integrated circuit formed on a semiconductor die, i.e. having the input shaping circuits, synapses, switchbox(es) and neurons of the neural network formed on a single semiconductor die. Alternatively, the integrated circuit may be formed on multiple semiconductor dies using a 2.5D or 3D stacked construction or a combination of these. For example, the integrated circuit may include multiple current-mode neural (sub)networks each formed on a semiconductor die, i.e. having input shaping circuits, synapses, switchbox(es) and neurons of each neural subnetwork formed on one semiconductor die, and having the subnetworks connected to each other to form a single neural network. Or the integrated circuit may comprise a current-mode neural network with portions of the network formed on separate semiconductor dies, for example having input shaping circuits, a sub-array of synapses, and switchbox(es) forming of portion of the neural network on one semiconductor die and having a second sub-array of synapses, switchbox(es) and neurons forming a second portion of the neural network formed on a second semiconductor die, and having the two network portions connected to each other to form a single neural network. In these implementations, the subnetworks may be connected using switch-box circuits in each subnetwork or network portion as described below.

FIGs. 19-21 are schematic block diagrams of an integrated circuit comprising a neural network implemented using 2.5D and 3D stacked constructions that can be advantageously applied for current-mode neural networks. With the current-mode design described above, these 2.5D and 3D constructions may be used without the need to include large driving buffer circuits for the through-silicon via (TSV) or substrate connections between the subnetworks. For example, a switch-box circuit in one subnetwork or network portion may be directly connected to a switch-box circuit in another subnetwork or network portion. The direct connection between switchbox circuits may be made by a bus or by vias, for example as described in the following embodiments. The current-mode design of the synapse arrays and switch-box circuits make this direct connection possible while avoiding the need for buffer circuits to interface between the switch-box circuits that are typically needed for voltage-mode circuits (to isolate the signal source and its load). In some embodiments, this direct connection between switch-box circuits is made by connecting each output of a switch-box circuit on a first subnetwork or network portion with an input of a switch-box circuit on a second subnetwork or network portion. This connection may be made in some embodiments by a direct connection by a bus or vias without any active circuit elements (e.g. transistors) in the electrical connection between the switch-box circuits.

FIG. 19 is an example of a 2.5D implementation comprising current-mode neural (sub)networks 1910 and 1920 each with current-mode switch-box circuits 1915 and 1925 respectively. In this example, the two neural subnetworks 1910, 1920 are formed on separate dies that are both mounted together on a substrate or interposer 1930, and the switch-box circuits 1915, 1925 in each subnetwork are connected to each other by a bus 1940 (or multiple buses), which may be formed on the substrate or interposer 1930. Although FIG. 19 shows two complete subnetworks 1910, 1920 each with input shaping circuits, array of synapses, switchbox(es) and neurons formed on a semiconductor die, this 2.5D arrangement may also be used for two network portions as described above. Three or more subnetworks or network portions may be combined in the same way by mounting three of more dies on which the subnetworks or network portions are formed on the substrate or interposer 1930 and connecting current-mode switch-box circuits for each of the subnetworks or network portions using bus 1940 or multiple busses.

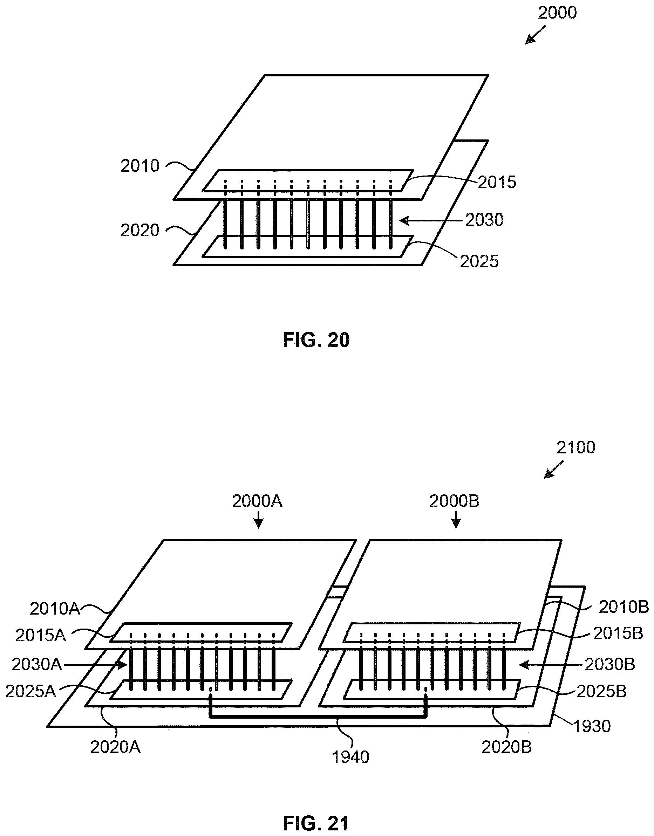

FIG. 20 is an example of a 3D stacked implementation 2000 comprising current-mode neural subnetworks or network portions 2010 and 2020 (as described above) each with current-mode switch-box circuits 2015 and 2025 respectively. In this arrangement, the two subnetworks/network portions 2010, 2020 are formed on separate dies that are stacked in a 3D-IC arrangement and the switch-box circuits 2015, 2025 are connected to each other by TSVs 2030. Three or more subnetworks or network portions may be combined in the same way by stacking three of more dies on which the subnetworks/network portions are formed and using TSVs to connect current-mode switch-box circuits in each of the stacked subnetworks/network portions.

FIG. 21 is an example of a combined 2.5D and 3D implementation 2100 that combines two examples 2000A and 2000B of the 3D implementation shown in FIG. 20 to interconnect four subnetworks/network portions. Each stacked pair of subnetworks/network portions 2010A/2020A and 2010B/2020B have their corresponding switch-box circuits 2015A/2025A and 2015B/2025B connected by through-silicon vias 2030A/2030B. The two stacked arrangements 2000A and 2000B may be mounted on a substrate or interposer 1930, and the switch-box circuits 2025A and 2025B are connected to each other by a bus 1940, which may be formed on the substrate or interposer 1930. More than four subnetworks/network portions may be combined in the same way by stacking three of more dies and using TSVs to connect current-mode switch-box circuits for each of the stacked subnetworks/network portions, and/or by mounting three of more stacked dies on the substrate or interposer 1930 and connecting current-mode switch-box circuits for each of the three or more stacked dies using bus 1940 or multiple busses.

Note that features of any of the embodiments disclosed herein may be combined in an appropriate manner. For example, the primitive circuit elements described herein and shown in FIGs. 3-7 may be used to build any of the neural network arrays described herein and shown in FIGs. 11-18, and these primitive circuit elements and neural network arrays may use the alternating p-type and n-type designs described herein and shown in FIG. 10, and/or the single die, 2.5D or 3D implementations described herein and shown in FIGs. 19-21.

## Claims

1. An integrated circuit comprising a current-mode neural network comprising:
a plurality of input shaping circuits, each input shaping circuit having an input for receiving a neural network input signal and being configured to apply a transfer function to the input signal to generate an analog processed input current;
a plurality of current-mode synaptic elements, each synaptic element connected to receive one of the processed input currents from one of the input shaping circuits and configured to apply a weight to the processed input current to generate an analog synapse output current;
a switch-box comprising a plurality of current-mode switches, each switch connected to receive analog synapse output current from a subset of the synaptic elements, the switch-box being configured to selectively route the received analog synapse output current to one of a plurality of switch-box outputs; and
a plurality of neurons, each neuron connected to one of the switch-box outputs and configured to generate a neuron output in response to a received analog synapse output current.

2. The integrated circuit of claim 1, wherein the outputs of the subset of synaptic elements are connected together to sum the analog synapse output currents from the subset of synaptic elements for input to the switch-box.

3. The integrated circuit of any of one claims 1-2, wherein the synaptic elements are arranged in rows and columns in an array, and wherein the subset of synaptic elements comprises synaptic elements in one column of the array, the analog synapse output currents of the column of synaptic elements being summed for input to the switch-box.

4. The integrated circuit of claim 3, wherein the switch-box is configured to selectively route synapse output current received from two or more columns in an array to one of the switch-box outputs.

5. The integrated circuit of any one of claims 3-4, wherein the switch-box is configured to selectively disconnect the subset of synaptic elements from all of the switch-box outputs.

6. The integrated circuit of any one of claims 1-5, wherein there are no active circuit elements electrically connected between the synaptic elements and the switch-box, and there are no active circuit elements electrically connected between the switch-box and the neurons.

7. The integrated circuit of any one of claims 1-6, wherein the integrated circuit is formed on a single semiconductor die.

8. The integrated circuit of any one of claims 1-6, wherein the current-mode neural network comprises two or more subnetworks or network portions formed on two or more semiconductor dies, each subnetwork or network portion comprising one or more current-mode switch-box circuits, wherein outputs of a first switch-box circuit of a first subnetwork or first network portion is connected to inputs of a second switch-box circuit of a second subnetwork or second network portion.

9. The integrated circuit of any one of claims 1-8, wherein the plurality of synaptic elements are arranged in distinct arrays, the arrays comprising a first array of the synaptic elements separated from a second array of the synaptic elements by a second switch-box interposed between the first and second arrays,
wherein the second switch-box comprises a plurality of switches, each switch connected to receive synapse output current from a subset of the synaptic elements of the first array, the second switch-box being configured to selectively route a received synapse output current to one of a plurality of second switch-box outputs, and
wherein output current from each output of the second switch-box is connected to sum with synapse output current from a subset of the synaptic elements of the second array.

10. The integrated circuit of claim 9, wherein the synaptic elements of each of the first and second arrays are arranged in rows and columns, wherein the second switch-box is arranged to connect the outputs of one or more columns of synaptic elements of the first array to the outputs of one column of synaptic elements of the second array.

11. The integrated circuit of any one of claims 9-10, wherein the second switch-box is configured to selectively disconnect the subset of synaptic elements of the first array from all of the second switch-box outputs.

12. The integrated circuit of any one of claims 9-11, wherein there are no active circuit elements electrically connected between the synaptic elements of the first array and the second switch-box, and there are no active circuit elements electrically connected between the second switch-box and the synaptic elements of the second array.

13. The integrated circuit of any one of claims 1-12, wherein the plurality of synaptic elements are arranged in distinct arrays, the arrays comprising a third array of the synaptic elements separated from a fourth array of the synaptic elements by a third switch-box interposed between the third and fourth arrays,
wherein the third switch-box comprises a plurality of switches, each switch connected to receive one of the processed input currents from one of the input shaping circuits, the third switch-box being configured to selectively route a received processed input current to one of a plurality of third switch-box outputs, and
wherein each output of the third switch-box is connected to inputs of a subset of the synaptic elements of the fourth array.

14. The integrated circuit of claim 13, wherein the synaptic elements of each of the third and second arrays are arranged in rows and columns, wherein the third switch-box is arranged to connect the inputs of one or more rows of synaptic elements of the third array to the inputs of one row of synaptic elements of the fourth array.

15. The integrated circuit of any one of claims 13-14, wherein the third switch-box is configured to selectively disconnect the inputs of synaptic elements of the third array from all of the third switch-box outputs.

16. The integrated circuit of any one of claims 12-14, wherein there are no active circuit elements electrically connected between the synaptic elements of the third array and the third switch-box, and there are no active circuit elements electrically connected between the third switch-box and the synaptic elements of the fourth array.
